(19) Europäisches Patentamt / European Patent Office / Office européen des brevets

(11) **EP 4 287 083 A1**

(12) **EUROPEAN PATENT APPLICATION**

(43) Date of publication:
**06.12.2023 Bulletin 2023/49**

(21) Application number: **23156759.5**

(22) Date of filing: **15.02.2023**

(51) International Patent Classification (IPC):
**G06N 20/00** (2019.01)     **G06N 5/045** (2023.01)

(52) Cooperative Patent Classification (CPC):
**G06N 20/00; G06N 5/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2022 JP 2022089085**

(71) Applicant: **Fujitsu Limited**
**Kawasaki-shi, Kanagawa 211-8588 (JP)**

(72) Inventor: **NARITA, Kenichiroh**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **DETERMINATION PROGRAM, DETERMINATION APPARATUS, AND METHOD OF DETERMINING**

(57)     A determination program for causing a computer to execute processing including: identifying, based on a difference between a first plurality of pieces of data and a second plurality of pieces of data obtained by processing the first plurality of pieces of data based on nonuniformity of the first plurality of pieces of data with reference to a first attribute out of a plurality of attributes, at least one second attribute processed with a processing amount larger than or equal to a predetermined threshold out of the plurality of attributes; identifying a magnitude of contribution of the at least one second attribute to an inference result in a case where data is input and a machine learning model performs inference; and determining, based on the magnitude of the contribution, an influence degree in a case where the machine learning model is trained by using the second plurality of pieces of data.

FIG. 1

| No. | ATTRIBUTE A (GENDER) | ATTRIBUTE B | ATTRIBUTE C | ATTRIBUTE D | CORRECT ANSWER LABEL | DETERMINATION RESULT |
|-----|------|-----|---|-----|---|---|
| 1 | MALE | 0 | 3 | 0.5 | A | A |
| 2 | MALE | 0 | 2 | 0.8 | B | A |
| 3 | FEMALE | 100 | 2 | 1.2 | A | B |
| 4 | FEMALE | 200 | 1 | 1.9 | B | B |
| 5 | MALE | 100 | 2 | 1.2 | B | A |
| 6 | MALE | 60 | 3 | 5.0 | A | A |

CORRECTION →

PROTECTED ATTRIBUTE

| No. | ATTRIBUTE A (GENDER) | ATTRIBUTE B | ATTRIBUTE C | ATTRIBUTE D | CORRECT ANSWER LABEL | DETERMINATION RESULT |
|-----|------|-----|---|-----|---|---|
| 1 | MALE | **30** | 3 | **0.2** | A | **B** |
| 2 | MALE | 0 | 2 | 0.8 | B | A |
| 3 | FEMALE | 100 | 2 | 1.2 | A | B |
| 4 | FEMALE | 200 | **3** | 1.9 | B | **A** |
| 5 | MALE | **50** | 2 | **0.3** | B | **B** |
| 6 | MALE | 60 | 3 | 5.0 | A | A |

EP 4 287 083 A1

**Description**

FIELD

The embodiment discussed herein is related to an accuracy determination technique.

BACKGROUND

In some cases, a machine learning model may be used for examination such as examination for loans or assist in the examination. However, as a result of training of the machine learning model with unfairly biased data, in some cases, for example, determination depending on the gender difference may be performed.

Accordingly, a fairness correction process for ensuring the fairness of determination by the machine learning model by excluding unfairly biased data is desired. In the fairness correction process, for example, training data is processed to retrain the machine learning model.

Japanese Laid-open Patent Publication No. 2021-012593, Japanese Laid-open Patent Publication No. 2021-149842, U.S. Patent Application Publication No. 2021/0304063, and U.S. Patent Application Publication No. 2020/0320429 are disclosed as related art.

SUMMARY

TECHNICAL PROBLEMS

The fairness correction process exerts influence on accuracy of machine learning. In machine learning based on data on which the fairness correction process is performed based only on the viewpoint of fairness, in some cases degradation of the accuracy of the machine learning model may occur.

In one aspect, an object is to indicate accuracy influence on a machine learning model due to a fairness correction process.

SOLUTION TO PROBLEM

According to an aspect of the embodiments, there is provided a determination program including instructions which, when executed by a computer, cause the computer to execute processing including: obtaining, based on a first plurality of pieces of data each of which includes a plurality of attributes, a second plurality of pieces of data generated by processing the first plurality of pieces of data in accordance with nonuniformity of the first plurality of pieces of data with reference to a first attribute of the plurality of attributes, each of the second plurality of pieces of data including data generated from a corresponding piece of data among the first plurality of pieces of data; calculating, for each attribute of the plurality of attributes, a processing amount based on a difference between each piece of data of the first plurality of pieces of data and a corresponding piece of data of the second plurality of pieces of data; identifying, from among the plurality of attributes, at least one second attribute for which the processing amount calculated is larger than or equal to a predetermined threshold; identifying a magnitude of contribution of the at least one second attribute, the magnitude of contribution indicating a degree how the at least one second attribute affects an inference result obtained by a machine learning model in a case where the machine learning model performs inference in response to inputting data into the machine learning; and determining, based on the magnitude of the contribution, an influence degree that indicates a degree how the second plurality of pieces of data affect the machine learning model in a case where the machine learning model is trained by using the second plurality of pieces of data.

ADVANTAGEOUS EFFECTS OF INVENTION

In the one aspect, the accuracy influence on the machine learning model due to the fairness correction process may be indicated.

BRIEF DESCRIPTION OF DRAWINGS

FIG. 1 is a diagram illustrating an example of a fairness correction process according to an embodiment;
FIG. 2 is a diagram illustrating examples of a data processing tendency due to the fairness correction process according to the present embodiment;

FIG. 3 (i.e., FIGs. 3A and 3B) is a diagram illustrating examples of model influence by data processing according to the present embodiment;

FIG. 4 is a diagram illustrating a configuration example of a determination apparatus according to the present embodiment;

FIG. 5 is a diagram illustrating examples of a processing tendency and a model contribution degree due to data processing according to the present embodiment;

FIG. 6 is a diagram illustrating an example of a determination on an influence degree by using the processing tendency and the model contribution degree according to the present embodiment;

FIG. 7 is a diagram illustrating an example of output of a model influence degree according to the present embodiment;

FIG. 8 is a diagram illustrating an example of candidate determination by using a model influence score according to the present embodiment;

FIG. 9 is a flowchart illustrating an example of a flow of a model influence degree determination process according to the present embodiment; and

FIG. 10 is a diagram illustrating a hardware configuration example of the determination apparatus according to the present embodiment.

## DESCRIPTION OF EMBODIMENTS

Hereinafter, embodiment examples of a determination program, a determination apparatus, and a method of determining according to an embodiment will be described in detail with reference to the drawings. The embodiment is not limited by the embodiment examples. The embodiment examples may be appropriately combined with each other as long as they do not contradict each other.

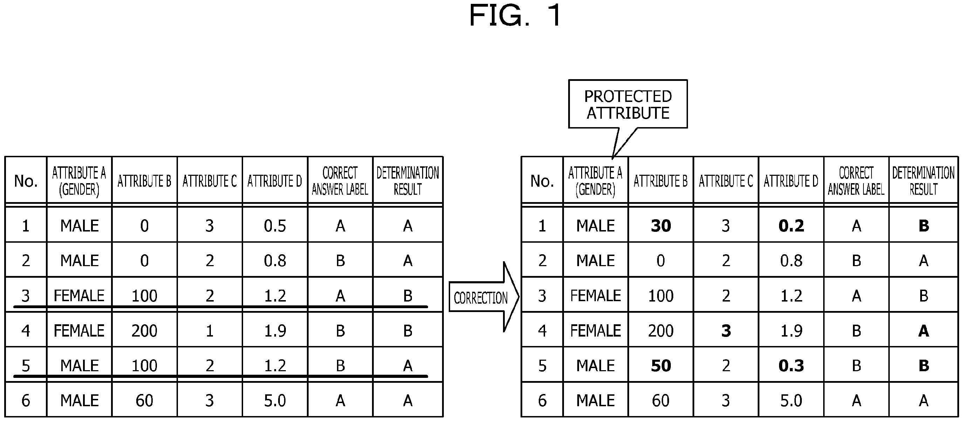

First, unfair determination by machine learning and a process for correcting the unfair determination are described. FIG. 1 is a diagram illustrating an example of a fairness correction process according to the present embodiment. A table on the left side of FIG. 1 illustrates examples of determination results of a machine learning model generated by machine learning in which attributes A to D are used as input data to the machine learning model, for example, features, and classification results of "A" or "B" are used as correct answer labels.

With reference to the table on the left side of FIG. 1, the determination results of a female No. 3 and a male No. 5 are different from each other although the attributes B to D other than the gender are all the same. This indicates that an unfair determination depending on the gender difference is performed by the machine learning model.

Accordingly, as the fairness correction process, as illustrated in the table on the right side of FIG. 1, the attribute A indicating gender is set as a protected attribute and numerical values of the attributes B to D other than the protected attribute are changed and processed into correction data, and the machine learning model is retrained such that the determination results do not depend on the gender difference. Numerical values of the attributes B to D other than the attribute A that is the protected attribute may be converted in accordance with predetermined rules or may be randomly changed within a numerically possible range. Not all the numerical values of the attribute B, C, and D are necessarily changed.

Although such a fairness correction process may correct unfair determination by the machine learning model, the fairness correction process is fundamentally processing of training data. Thus, there is a possibility that the accuracy of the machine learning model is degraded. Accordingly, for example, when the fairness correction process is performed during operation, the system using the machine learning model is significantly influenced.

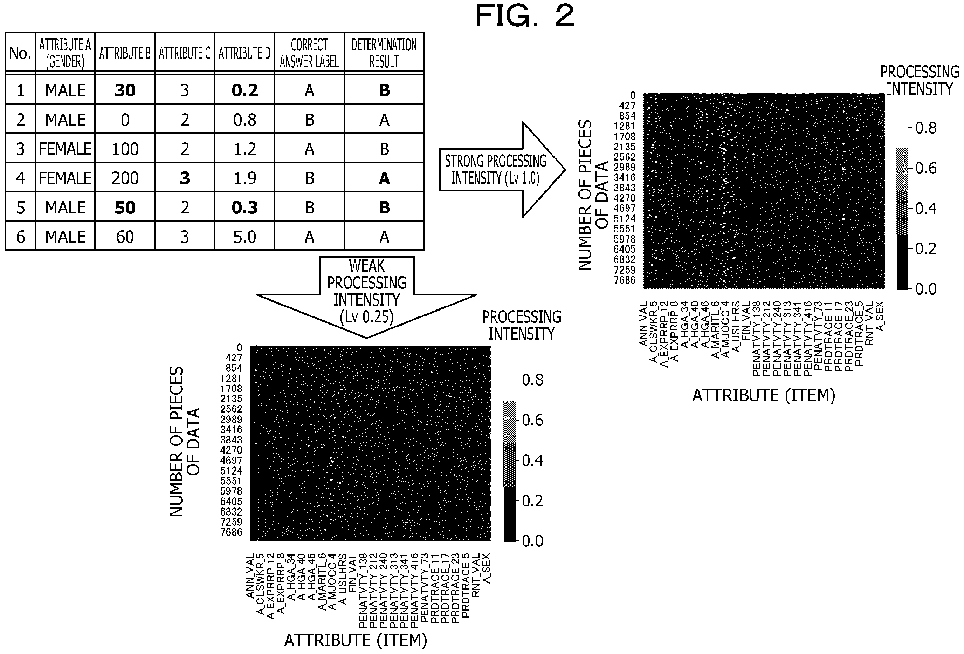

FIG. 2 is a diagram illustrating examples of a data processing tendency due to the fairness correction process according to the present embodiment. The examples of FIG. 2 include graphs illustrating processing tendencies of the correction data processed with two different processing intensities. Referring to the examples of FIG. 2, in the graphs indicating the processing tendencies of the correction data, the attributes of pieces of data are plotted on the horizontal axis, the number of pieces of data on an attribute-by-attribute basis is plotted on the vertical axis, and the processing intensities are indicated by colors in the graphs. The processing intensity may be calculated from the amount of difference between the input data and correction data for the input data. Referring to the graphs, it may be seen that there is nonuniformity in the attributes selected as targets of the processing by the fairness correction process, for example, the processing ranges, and the amount of change in data increases as the processing intensity increases.

Meanwhile, in a long-term operation of a system using the machine learning model, periodic retraining is desired to maintain the accuracy of the machine learning model. Thus, it is desired that the influence of the training data exerted on the accuracy of the existing machine learning model be small. The influence exerted on the accuracy of the machine learning model may be simply represented as influence exerted on the machine learning model, influence on the machine learning model, or the like. When the processing tendency illustrated in FIG. 2 and the like are considered, training data exerting a small amount of influence on the machine learning model is, for example, training data with a small change before and after execution of the fairness correction process. For example, it may be thought that the influence exerted on the machine learning model is small when the processing range of the correction data is wide and the processing intensity is weak. As an index of a model influence degree, the variance value of the correction data for the processing range is expressed. Correction data having a smaller variance value and a weaker processing intensity has a smaller influence on the machine learning model.

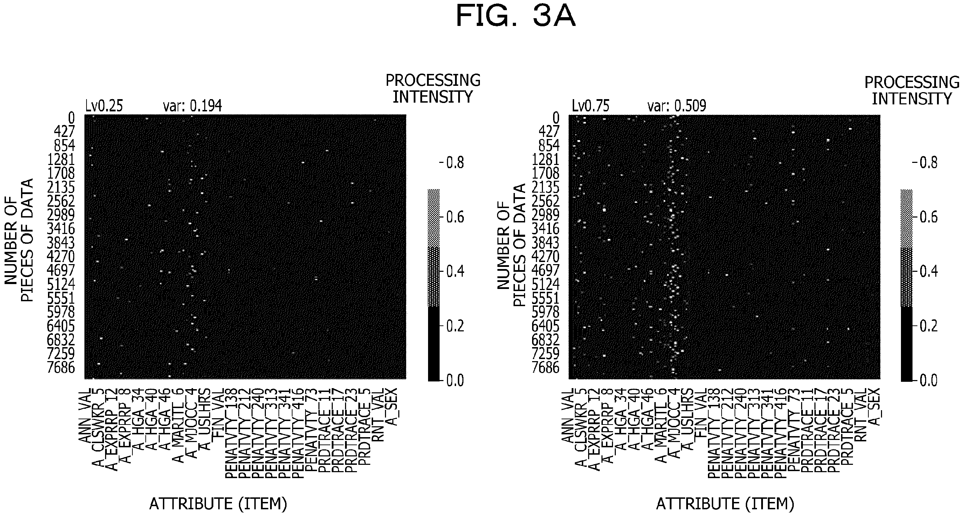

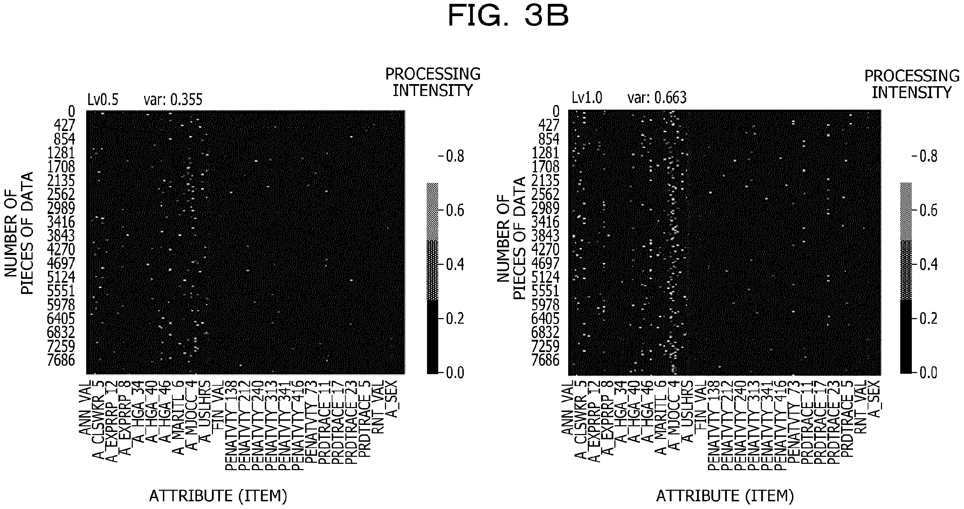

FIG. 3 is a diagram illustrating examples of model influence due to data processing according to the present embodiment. The examples of FIG. 3 include graphs illustrating processing tendencies of the correction data processed with four different processing intensities. The variance value for the processing range of the correction data is indicated by var. As is the case with the processing intensity, var may be calculated from the difference amount between the input data and its correction data, and, as illustrated in FIG. 3, var increases as the processing intensity increases. Thus, when var is small, it may be thought that the influence on the machine learning model is small.

However, referring to FIG. 3, for example, it may be understood that an attribute "A_MJOCC_4" is processed most and there is nonuniformity in the attributes that are processed. Thus, whether an attribute that is processed is an attribute which draws attention of the machine learning model is also important in considering the influence on the machine learning model. For example, in a case where the attribute that are processed is not an attribute that draws attention, it may be thought that, even when the processing intensity is high, the influence on the machine learning model is actually small. Whether an attribute draws the attention of the machine learning model may be determined by the degree of attention with respect to the machine learning model, for example, a model contribution degree calculated by an existing technique. Thus, according to the present embodiment, influence on the machine learning model is determined in consideration of, in addition to var, the model contribution degree of the attribute that are processed.

[Functional Configuration of Determination Apparatus 10]

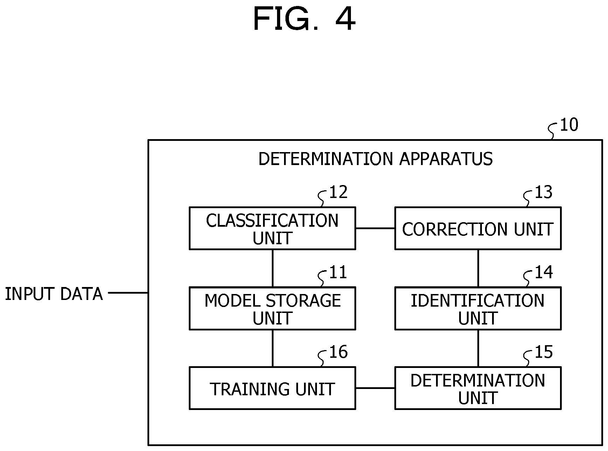

Next, a functional configuration of a determination apparatus 10 that is an operating subject according to the present embodiment is described. FIG. 4 is a diagram illustrating a configuration example of the determination apparatus 10 according to the present embodiment. The determination apparatus 10 indicates accuracy influence on the machine learning model due to the fairness correction process.

For indicating the accuracy influence on the machine learning model, the determination apparatus 10 identifies the model contribution degree of the attribute processed with a large processing amount identified from the difference between the input data and the correction data and determines, based on the model contribution degree, the influence degree in a case where the machine learning model is trained. The determination apparatus 10 includes a model storage unit 11, a classification unit 12, a correction unit 13, an identification unit 14, a determination unit 15, and a training unit 16.

The model storage unit 11 stores, for example, the machine learning model. For example, the model storage unit 11 stores parameters of a neural network of the machine learning model. The parameters include weights between neurons. The weights between neurons are updated by machine learning.

For example, the classification unit 12 uses the machine learning model stored in the model storage unit 11 to classify the correction data generated by converting, with the correction unit 13, the input data and outputs as an inference result of the machine learning model.

For example, as illustrated in the table on the right side of FIG. 1, the correction unit 13 generates the correction data by converting the input data for the machine learning model by using correction filters created according to predetermined rules. To correct a machine learning model that has been trained to make an unfair determination, the correction data is input to the machine learning model as the input data or used as the training data for retraining the machine learning model.

Based on the difference between the input data and the correction data obtained by processing the input data based on the nonuniformity of the input data with reference to a first attribute out of a plurality of the attributes, the identification unit 14 identifies a second attribute processed with a processing amount larger than or equal to a predetermined threshold out of the plurality of attributes. The first attribute and the second attribute may be the protected attributes. The input data corresponds to a first plurality of pieces of data, and the correction data corresponds to a second plurality of pieces of data obtained by processing the first plurality of pieces of data, for example, performing the correction process on the first plurality of pieces of data. The second attribute processed with a processing amount larger than or equal to the predetermined threshold out of the plurality of attributes may be, for example, one or a plurality of second attributes, in descending order, with a processing amount larger than or equal to the predetermined threshold out of the plurality of attributes.

The identification unit 14 identifies, for example, the magnitude of contribution of the second attribute to the inference result in a case where the classification unit 12 inputs the correction data and the machine learning model performs inference.

The determination unit 15 determines, for example, the influence degree based on the magnitude of the contribution identified by the identification unit 14 in a case where the machine learning model is trained with the correction data.

For example, the training unit 16 retrains the machine learning model stored in the model storage unit 11 by using the correction data selected based on the influence degree determined by the determination unit 15 and updates the machine learning model. The selected correction data is, for example, data on which processing that is good for the machine learning model is performed, in which the mainly processed attributes have a high contribution degree to the machine learning model, and which is entirely processed.

[Details of Functions]

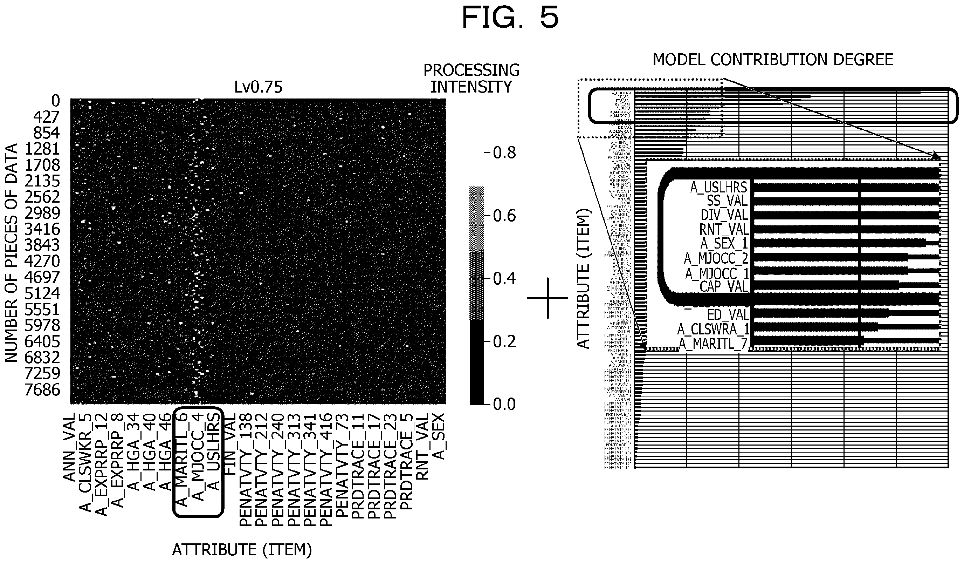

Next, determination on the influence on the machine learning model executed by the determination apparatus 10 (hereafter, may be referred to as "model influence" in some cases) is described in more detail. FIG. 5 is a diagram illustrating examples of the processing tendency and the model contribution degree due to the data processing according to the present embodiment. As illustrated on the left side of FIG. 5, by using the processing intensity of the entire correction data, for example, the distribution, the determination apparatus 10 may determine the processing tendency by the data processing such as whether the attributes are uniformly or nonuniformly processed. However, only with the distribution, it is difficult for the determination apparatus 10 to determine whether the attributes on which the processing is performed, for example, the attributes surrounded in a box on the left side of FIG. 5 are attributes having a high model influence. Accordingly, as illustrated on the right side of FIG. 5, for the determination on the model influence, the determination apparatus 10 also uses whether the model contribution degree of the processed attributes, for example, the attributes in the box is high. For example, the determination apparatus 10 calculates the influence degree on the machine learning model by using the variance of the correction data and also using the degree of matching between the processed attributes and the number of processes thereof and the model contribution degree (hereafter, referred to as "contribution degree rank").

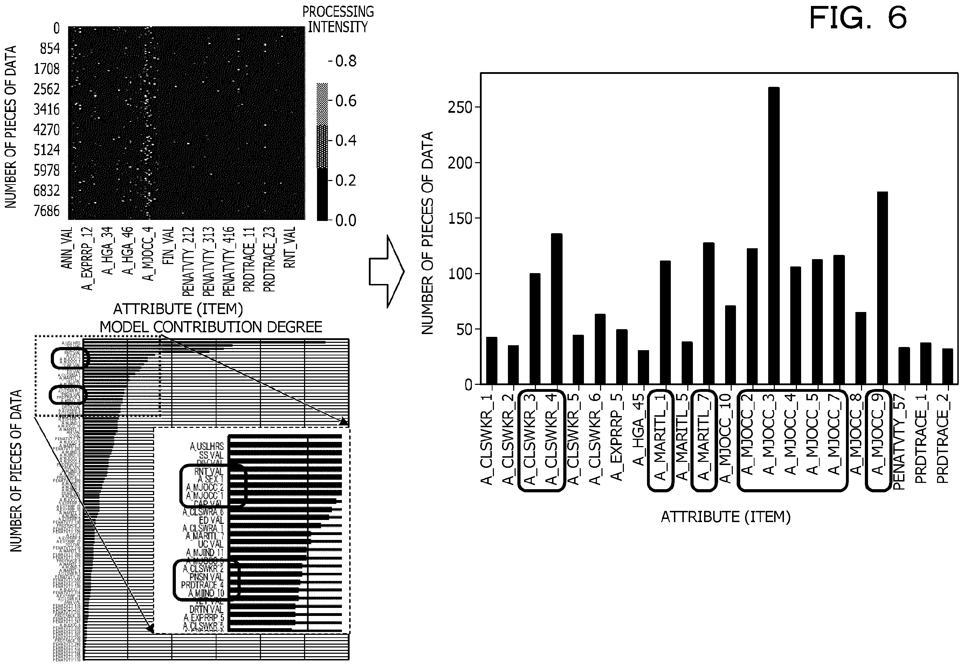

FIG. 6 is a diagram illustrating an example of a determination on the influence degree by using the processing tendency and the model contribution degree according to the present embodiment. First, the determination apparatus 10 extracts, for example, strongly processed attributes from the difference between the input data and the correction data as the processing tendency of the correction data. For example, as illustrated in the upper left part of FIG. 6, the determination apparatus 10 calculates the absolute values of the difference between the input data and the correction data by creating a heat map and extracts the attributes strongly processed with a processing intensity larger than or equal to a certain value.

As illustrated in the lower left part of FIG. 6, for example, the determination apparatus 10 calculates the model contribution degree of each attribute. The model contribution degree, which varies depending on the target machine learning model, is calculated by an existing technique such as a filter method, a gain method, or the like.

As illustrated on the right side of FIG. 6, for example, the determination apparatus 10 counts the number of pieces of data of the extracted attributes strongly processed with a processing intensity larger than or equal to a certain value, extracts a predetermined number of the attributes in descending order, and calculates a contribution degree rank from the model contribution degrees of the extracted attributes. The contribution degree rank is calculated by using, for example, Expression (1) below.

$$\text{Contribution Degree Rank} = \sum_{n=1}^{num} (Rank^{-1} * Count) \qquad \cdots (1)$$

In Expression (1), for each of the predetermined number of the attributes extracted in descending order, for example, num is a number indicating the attribute, Rank indicates the rank of the model contribution degree of the attribute, and Count indicates the number of pieces of data counted for the attribute.

Based on the variance value of the correction data and the contribution degree rank, the determination apparatus 10 determines the model influence degree. The model influence degree is determined by, for example, mapping the model influence degree from the variance value of the correction data and the contribution degree rank.

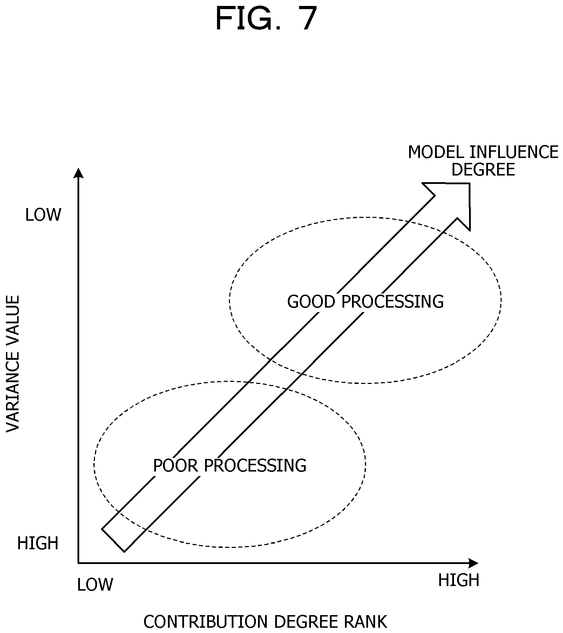

FIG. 7 is a diagram illustrating an example of output of the model influence degree according to the present embodiment. As illustrated in FIG. 7, the determination apparatus 10 maps the model influence degree based on the variance value of the correction data and the contribution degree rank. For example, the processing of the training data is good for the machine learning model when the data is entirely processed, for example, the variance value is small, and the mainly processed attributes have a high contribution degree to the machine learning model. Accordingly, the determination apparatus 10 may determine that the correction data with a low variance value and a high contribution degree rank, in the case of FIG. 7, the correction data mapped at the upper right of the graph has a higher model influence degree and a smaller influence exerted on the accuracy of the machine learning model.

The determination apparatus 10 may select, from among various types of correction data, candidates for the correction data to be used for training of the machine learning model based on a fairness score by the fairness correction process, prediction accuracy of the machine learning model, and the model influence score.

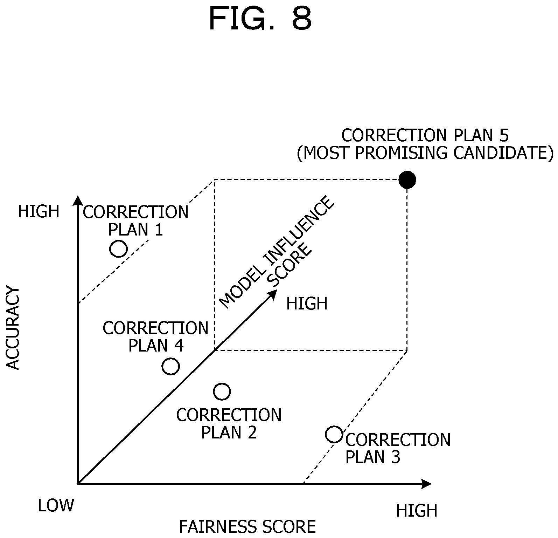

FIG. 8 is a diagram illustrating an example of candidate determination by using the model influence score according to the present embodiment. A graph in FIG. 8 is obtained by mapping correction data plans 1 to 5 with the fairness score by the fairness correction process plotted on the x-axis, the prediction accuracy of the machine learning model plotted on the y-axis, and the model influence score plotted on the z-axis.

The fairness score by the fairness correction process is, for example, a DI score that is an example of the fairness score and may be calculated by dividing the incidence of protected attribute value (for example, gender = female) to be watched carefully and an arbitrary determination result X by the incidence of the other determination results X. The prediction accuracy of the machine learning model is, for example, an evaluation index of an existing technique, for example, accuracy (correct answer rate) and may be calculated by dividing the number of correct answers in a case where the input data is input to the machine learning model by the number of all pieces of the input data. The model influence score may be calculated, for example, by the following expression: "model influence score = (a × 1/variance value + β × contribution degree rank)". In the above-described expression, a and β are weight parameters for the variance value and the contribution degree rank, respectively.

As illustrated in FIG. 8, the determination apparatus 10 selects, as the most promising candidate used for training of the machine learning model, the correction data with which all of the fairness score, the prediction accuracy of the machine learning model, and the model influence score are high (correction plan 5 in the example illustrated in FIG. 8).

[Flow of Process]

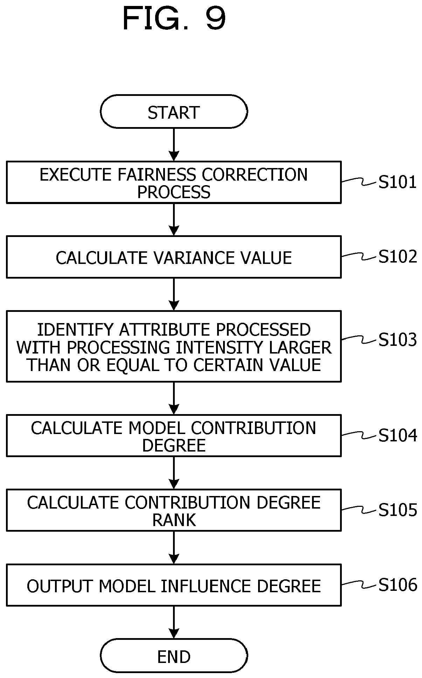

Next, with reference to FIG. 9, a flow of a model influence degree determination process executed by the determination apparatus 10 is described. FIG. 9 is a flowchart illustrating an example of the flow of the model influence degree determination process according to the present embodiment.

First, as illustrated in FIG. 9, the determination apparatus 10 executes the fairness correction process on the input data (step S101). For example, the determination apparatus 10 causes the input data to pass through each of correction filters created in accordance with a plurality of different rules and generates the correction data for each of the correction plans.

Next, for each of the correction plans, the determination apparatus 10 calculates the variance value based on the difference amount between the corresponding correction data and the input data (step S102).

Next, for each of the correction plans, the determination apparatus 10 calculates the processing intensity based on the difference amount between the corresponding correction data and the input data, thereby identifying the attributes strongly processed with the processing intensity larger than or equal to a certain value (step S103). The attributes processed with the processing intensity larger than or equal to a certain value may be, for example, a predetermined number, in descending order, of the attributes processed with the processing intensity larger than or equal to a predetermined threshold selected.

Next, for each of the correction plans, the determination apparatus 10 calculates the model contribution degree of the attributes identified in step S103 (step S104).

Next, for each of the correction plans, the determination apparatus 10 calculates the contribution degree rank based on the model contribution degree calculated in step S104 (step S105).

Next, for each of the correction plans, the determination apparatus 10 outputs the model influence degree based on the variance value calculated in step S102 and the contribution degree rank calculated in step S105 (step S106). The output of the model influence degree may be, for example, mapping of the model influence degree based on the variance value and the contribution degree rank as illustrated in FIG. 8. When the determination apparatus 10 performs this for each of the correction plans, the determination apparatus 10 may determine the influence exerted on the accuracy of the machine learning model for each of the correction plans. After step S106 has been executed, the model influence degree determination process illustrated in FIG. 9 ends.

[Effects]

As described above, the determination apparatus 10 identifies, based on a difference between a first plurality of pieces of data and a second plurality of pieces of data obtained by processing the first plurality of pieces of data based on nonuniformity of the first plurality of pieces of data with reference to a first attribute out of a plurality of attributes, at least one second attribute processed with a processing amount larger than or equal to a predetermined threshold out of the plurality of attributes. The determination apparatus 10 also identifies a magnitude of contribution of the at least one second attribute to an inference result in a case where data is input and a machine learning model performs inference. The determination apparatus 10 determines, based on the magnitude of the contribution, an influence degree in a case where the machine learning model is trained by using the second plurality of pieces of data.

As described above, the determination apparatus 10 identifies the model contribution degree of the attribute processed with a large processing amount identified from the difference between the input data and the correction data and determines, based on the model contribution degree, the influence degree in training. Thus, the determination apparatus 10 may indicate the accuracy influence on the machine learning model due to the fairness correction.

In the process of identifying the at least one second attribute executed by the determination apparatus 10, the at least one second attribute includes a plurality of second attributes. The process of identifying the at least one second attribute includes a process of identifying, based on the difference between the second plurality of pieces of data and the first plurality of pieces of data, one or the plurality of second attributes processed with processing amounts larger than or equal to the predetermined threshold in descending order out of the plurality of attributes.

Thus, the determination apparatus 10 may indicates the accuracy influence on the machine learning model due to the fairness correction only for the attributes processed with a larger processing amount.

[System]

Unless otherwise specified, processing procedures, control procedures, specific names, and information including various types of data and parameters described in the above description or the drawings may be arbitrarily changed. The specific examples, distributions, numerical values, and so forth described in the embodiment examples are merely exemplary and may be arbitrarily changed.

The specific form of distribution or integration of elements included in the determination apparatus 10 is not limited to that illustrated in the drawings. For example, the classification unit 12 of the determination apparatus 10 may be distributed to a plurality of processing units, or the correction unit 13 and the identification unit 14 of the determination apparatus 10 may be integrated into a single processing unit. For example, all or part of the elements may be configured so as to be functionally or physically distributed or integrated in arbitrary units in accordance with various types of loads, usage states, or the like. All or an arbitrary subset of the processing functions performed by the apparatus may be realized by a central processing unit (CPU) and a program analyzed and executed by the CPU or may be realized by hardware using wired logic.

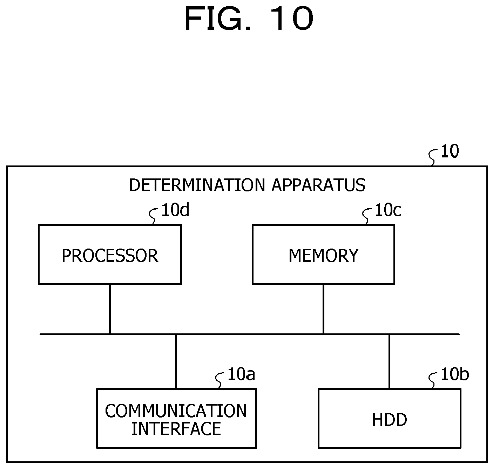

FIG. 10 is a diagram illustrating a hardware configuration example of the determination apparatus 10 according to the present embodiment. As illustrated in FIG. 10, the determination apparatus 10 includes a communication interface 10a, a hard disk drive (HDD) 10b, a memory 10c, and a processor 10d. The components illustrated in FIG. 10 are coupled to each other via a bus or the like.

The communication interface 10a is a network interface card or the like and communicates with an information processing apparatus. The HDD 10b stores, for example, the program and data that cause the functions illustrated in, for example, FIG. 4 to operate.

Examples of the processor 10d include a CPU, a microprocessor unit (MPU), a graphics processing unit (GPU), and the like. Alternatively, the processor 10d may be realized by an integrated circuit such as an application-specific integrated circuit (ASIC) or a field-programmable gate array (FPGA). For example, the processor 10d reads, from the HDD 10b or the like, a program that executes processes similar to the processes performed by the processing units illustrated in, for example, FIG. 4 and loads the read programs onto the memory 10c. Thus, the processor 10d may be operated as a hardware circuit that executes the processes that realize the functions described with reference to FIG. 4 or the like.

The determination apparatus 10 may also realize the functions similar to the functions of the above-described embodiment examples by reading out the above-described program from a recording medium with a medium reading device and executing the above-described read program. The program described in the embodiment examples is not limited to the program to be executed by the determination apparatus 10. For example, the above-described embodiment examples may be similarly applied in a case where an information processing apparatus executes the program or in a case where the information processing apparatus and the determination apparatus 10 cooperate with each other to execute the program.

The program may be distributed via a network such as the Internet. The program may be recorded in a computer-readable recording medium such as a hard disk, a flexible disk (FD), a compact disc read-only memory (CD-ROM), a magneto-optical (MO) disk, or a Digital Versatile Disc (DVD). The program may be executed by being read from the recording medium by the determination apparatus 10 or the like.

The following appendices are further disclosed in relation to the embodiment including the embodiment examples described above.

**Claims**

1. A determination program comprising instructions which, when executed by a computer, cause the computer to execute processing comprising:

obtaining, based on a first plurality of pieces of data each of which includes a plurality of attributes, a second plurality of pieces of data generated by processing the first plurality of pieces of data in accordance with nonuniformity of the first plurality of pieces of data with reference to a first attribute of the plurality of attributes, each of the second plurality of pieces of data including data generated from a corresponding piece of data among the first plurality of pieces of data;

calculating, for each attribute of the plurality of attributes, a processing amount based on a difference between each piece of data of the first plurality of pieces of data and a corresponding piece of data of the second plurality of pieces of data;

identifying, from among the plurality of attributes, at least one second attribute for which the processing amount calculated is larger than or equal to a predetermined threshold;

identifying a magnitude of contribution of the at least one second attribute, the magnitude of contribution indicating a degree how the at least one second attribute affects an inference result obtained by a machine learning model in a case where the machine learning model performs inference in response to inputting data into the machine learning; and

determining, based on the magnitude of the contribution, an influence degree that indicates a degree how the second plurality of pieces of data affect the machine learning model in a case where the machine learning model is trained by using the second plurality of pieces of data.

2. The determination program according to claim 1, wherein

the at least one second attribute includes a plurality of second attributes, and
the identifying of the at least one second attribute includes
identifying, based on the difference between the second plurality of pieces of data and the first plurality of pieces of data, one or the plurality of second attributes processed with processing amounts larger than or equal to the predetermined threshold in descending order out of the plurality of attributes.

3. A determination apparatus comprising
a control unit configured to perform processing including:

obtaining, based on a first plurality of pieces of data each of which includes a plurality of attributes, a second plurality of pieces of data generated by processing the first plurality of pieces of data in accordance with nonuniformity of the first plurality of pieces of data with reference to a first attribute of the plurality of attributes, each of the second plurality of pieces of data including data generated from a corresponding piece of data among the first plurality of pieces of data;

calculating, for each attribute of the plurality of attributes, a processing amount based on a difference between each piece of data of the first plurality of pieces of data and a corresponding piece of data of the second plurality of pieces of data;

identifying, from among the plurality of attributes, at least one second attribute for which the processing amount calculated is larger than or equal to a predetermined threshold;

identifying a magnitude of contribution of the at least one second attribute, the magnitude of contribution indicating a degree how the at least one second attribute affects an inference result obtained by a machine learning model in a case where the machine learning model performs inference in response to inputting data into the machine learning; and

determining, based on the magnitude of the contribution, an influence degree that indicates a degree how the second plurality of pieces of data affect the machine learning model in a case where the machine learning model is trained by using the second plurality of pieces of data.

4. A determination method implemented by a computer, the determination method comprising:

obtaining, based on a first plurality of pieces of data each of which includes a plurality of attributes, a second plurality of pieces of data generated by processing the first plurality of pieces of data in accordance with nonuniformity of the first plurality of pieces of data with reference to a first attribute of the plurality of attributes, each of the second plurality of pieces of data including data generated from a corresponding piece of data among the first plurality of pieces of data;

calculating, for each attribute of the plurality of attributes, a processing amount based on a difference between each piece of data of the first plurality of pieces of data and a corresponding piece of data of the second plurality of pieces of data;

identifying, from among the plurality of attributes, at least one second attribute for which the processing amount calculated is larger than or equal to a predetermined threshold;

identifying a magnitude of contribution of the at least one second attribute, the magnitude of contribution indicating a degree how the at least one second attribute affects an inference result obtained by a machine learning model in a case where the machine learning model performs inference in response to inputting data into the machine learning; and

determining, based on the magnitude of the contribution, an influence degree that indicates a degree how the second plurality of pieces of data affect the machine learning model in a case where the machine learning model is trained by using the second plurality of pieces of data.

# FIG. 1

| No. | ATTRIBUTE A (GENDER) | ATTRIBUTE B | ATTRIBUTE C | ATTRIBUTE D | CORRECT ANSWER LABEL | DETERMINATION RESULT |
|---|---|---|---|---|---|---|
| 1 | MALE | 0 | 3 | 0.5 | A | A |
| 2 | MALE | 0 | 2 | 0.8 | B | A |
| 3 | FEMALE | 100 | 2 | 1.2 | A | B |
| 4 | FEMALE | 200 | 1 | 1.9 | B | B |
| 5 | MALE | 100 | 2 | 1.2 | B | A |
| 6 | MALE | 60 | 3 | 5.0 | A | A |

CORRECTION →

PROTECTED ATTRIBUTE

| No. | ATTRIBUTE A (GENDER) | ATTRIBUTE B | ATTRIBUTE C | ATTRIBUTE D | CORRECT ANSWER LABEL | DETERMINATION RESULT |
|---|---|---|---|---|---|---|
| 1 | MALE | **30** | 3 | **0.2** | A | **B** |
| 2 | MALE | 0 | 2 | 0.8 | B | A |
| 3 | FEMALE | 100 | 2 | 1.2 | A | B |
| 4 | FEMALE | 200 | **3** | 1.9 | B | **A** |
| 5 | MALE | **50** | 2 | **0.3** | B | **B** |
| 6 | MALE | 60 | 3 | 5.0 | A | A |

EP 4 287 083 A1

FIG. 2

# FIG. 3A

# FIG. 3B

# FIG. 4

**DETERMINATION APPARATUS** ⌇10

| | |
|---|---|
| CLASSIFICATION UNIT ⌇12 | CORRECTION UNIT ⌇13 |
| MODEL STORAGE UNIT ⌇11 | IDENTIFICATION UNIT ⌇14 |
| TRAINING UNIT ⌇16 | DETERMINATION UNIT ⌇15 |

INPUT DATA

# FIG. 5

MODEL CONTRIBUTION DEGREE

Lv0.75

PROCESSING INTENSITY

NUMBER OF PIECES OF DATA

0
427
854
1281
1708
2135
2562
2989
3416
3843
4270
4697
5124
5551
5978
6405
6832
7259
7686

-0.8

-0.6

-0.4

-0.2

-0.0

ATTRIBUTE (ITEM)

ANN_VAL
A_CLSWKR_5
A_EXPRRP_12
A_EXPRRP_8
A_HGA_34
A_HGA_40
A_HGA_46
A_MARITL_6
A_MJOCC_4
A_USLHRS
FIN_VAL
PENATVTY_138
PENATVTY_212
PENATVTY_240
PENATVTY_313
PENATVTY_341
PENATVTY_416
PENATVTY_73
PRDTRACE_11
PRDTRACE_17
PRDTRACE_23
PRDTRACE_5
RNT_VAL
A_SEX

ATTRIBUTE (ITEM)

ATTRIBUTE (ITEM)

A_USLHRS
SS_VAL
DIV_VAL
RNT_VAL
A_SEX_1
A_MJOCC_2
A_MJOCC_1
CAP_VAL
ED_VAL
A_CLSWRA_1
A_MARITL_7

EP 4 287 083 A1

FIG. 6

# FIG. 7

# FIG. 8

# FIG. 9

START

EXECUTE FAIRNESS CORRECTION PROCESS — S101

CALCULATE VARIANCE VALUE — S102

IDENTIFY ATTRIBUTE PROCESSED WITH PROCESSING INTENSITY LARGER THAN OR EQUAL TO CERTAIN VALUE — S103

CALCULATE MODEL CONTRIBUTION DEGREE — S104

CALCULATE CONTRIBUTION DEGREE RANK — S105

OUTPUT MODEL INFLUENCE DEGREE — S106

END

# FIG. 10

DETERMINATION APPARATUS ⌇10

PROCESSOR ⌇10d

MEMORY ⌇10c

COMMUNICATION INTERFACE ⌇10a

HDD ⌇10b

Europäisches
Patentamt

European
Patent Office

Office européen
des brevets

# EUROPEAN SEARCH REPORT

Application Number

EP 23 15 6759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S. VERMA ET AL: "Removing biased data to improve fairness and accuracy", ARXIV.ORG, CORNELL UNIVERSITY LIBRARY, 201 OLIN LIBRARY CORNELL UNIVERSITY ITHACA, NY 14853, 5 February 2021 (2021-02-05), XP081876203, DOI: 10.48550/arXiv.2102.03054 * sections 2 and 3 * | 1-4 | INV. G06N20/00 ADD. G06N5/045 |
| A | M. B. ZAFAR ET AL: "Fairness beyond disparate treatment & disparate impact: learning classification without disparate mistreatment", PROCEEDINGS OF THE 26TH INTERNATIONAL CONFERENCE ON WORLD WIDE WEB (WWW'17), 3 April 2017 (2017-04-03), pages 1171-1180, XP058327304, DOI: 10.1145/3038912.3052660 * sections 2-4 * | 1-4 | |
| A | I. Y. CHEN ET AL: "Why is my classifier discriminatory?", ARXIV.ORG, CORNELL UNIVERSITY LIBRARY, 201 OLIN LIBRARY CORNELL UNIVERSITY ITHACA, NY 14853, 10 December 2018 (2018-12-10), XP080998001, DOI: 10.48550/arXiv.1805.12002 * the whole document * | 1-4 | TECHNICAL FIELDS SEARCHED (IPC) G06N |

-/--

The present search report has been drawn up for all claims

| Place of search | Date of completion of the search | Examiner |
|---|---|---|
| The Hague | 30 September 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Europäisches Patentamt
European Patent Office
Office européen des brevets

Application Number

EP 23 15 6759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | K. H. TAE, S. E. WHANG: "Slice Tuner: a selective data acquisition framework for accurate and fair machine learning models", PROCEEDINGS OF THE 27TH ANNUAL INTERNATIONAL CONFERENCE ON MOBILE COMPUTING AND NETWORKING (SIGMOD'21), 18 June 2021 (2021-06-18), pages 1771-1783, XP058532209, DOI: 10.1145/3448016.3452792 * sections 2-5 * | 1-4 | |
| A | J. CHAKRABORTY ET AL: "Bias in machine learning software: why? how? what to do?", PROCEEDINGS OF THE 29TH ACM JOINT MEETING ON EUROPEAN SOFTWARE ENGINEERING CONFERENCE AND SYMPOSIUM ON THE FOUNDATIONS OF SOFTWARE ENGINEERING (ESEC/FSE'21), 23 August 2021 (2021-08-23), pages 429-440, XP058650516, DOI: 10.1145/3468264.3468537 * sections 3 and 4 * | 1-4 | |
| A | T. ZHAO ET AL: "Towards fair classifiers without sensitive attributes exploring biases in related features", PROCEEDINGS OF THE 15TH ACM INTERNATIONAL CONFERENCE ON WEB SEARCH AND DATA MINING (WSDM'22), 21 February 2022 (2022-02-21), pages 1433-1442, XP058782856, DOI: 10.1145/3488560.3498493 * sections 3-6 * | 1-4 | TECHNICAL FIELDS SEARCHED (IPC) |

The present search report has been drawn up for all claims

| Place of search | Date of completion of the search | Examiner |
|---|---|---|
| The Hague | 30 September 2023 | Douarche, Nicolas |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021012593 A
- JP 2021149842 A
- US 20210304063
- US 20200320429